(19) Europäisches Patentamt
European Patent Office
Office européen des brevets

(11) Publication number: **0 208 997**
**A1**

(12) **EUROPEAN PATENT APPLICATION**

(21) Application number: 86109027.2

(22) Date of filing: 02.07.86

(51) Int. Cl.⁴: **G 05 B 19/04**

(30) Priority: 19.07.85 US 757279

(43) Date of publication of application: 21.01.87 Bulletin 87/4

(84) Designated Contracting States: AT BE CH DE FR GB IT LI LU NL SE

(71) Applicant: Lovrenich, Rodger T., 209 Whispering Sands, Santa Teresa New Mexico 88008 (US)

(72) Inventor: Lovrenich, Rodger T., 209 Whispering Sands, Santa Teresa New Mexico 88008 (US)

(74) Representative: Dipl.-Ing. H. Hauck Dipl.-Phys. W. Schmitz Dipl.-Ing. E. Graalfs Dipl.-Ing. W. Wehnert Dr.-Ing. W. Döring, Mozartstrasse 23, D-8000 München 2 (DE)

(54) **Control system and method with diagnostic logic.**

(57) A system and method for controlling operation of a plurality of elements in an automated process, such as a production process, and indicating error conditions as they occur. Each unique set of input and output conditions of the various system elements defines a unique logic state or zone. Thus, there are defined a multiplicity of valid system logic states or zones, each having a unique input/output image. A predetermined sequence of zones, productive zones representing designed machine operations, is stored in a zone table. All zones not explicitly defined in the zone table are automatically treated as error zones. A zone engine automatically cycles to observe any change in input/output image. Any change in inputs from the various system elements automatically transfer action to the unique zone associated with such inputs, resulting in corresponding changes in control outputs to the system elements and/or display an error message as appropriate.

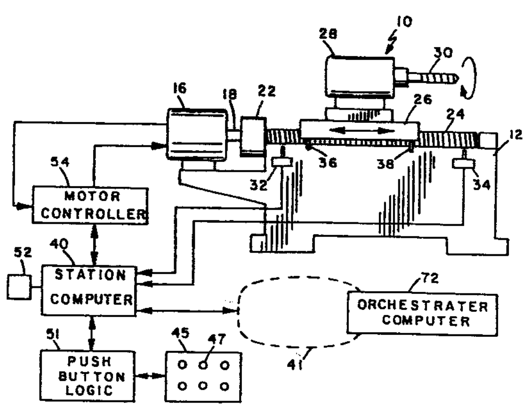


EP 0 208 997 A1

# CONTROL SYSTEM AND METHOD WITH DIAGNOSTIC LOGIC

The present invention relates to a control system and method utilizing logic devices to control apparatus and to diagnose errors in the operation of the apparatus.

## Background of the Invention

Machine control systems generally include an automatic mode of operation whereby the machine is automatically cycled through a work sequence. Relay ladder logic commonly has been used to define the machine sequences, whether the logic is effected by relays or programmable controllers. The typical relay ladder logic diagram is a massive listing of relay, switch and solenoid conditions without an indication of logic flow which, while easy to read, is difficult to translate into the logic conditions intended to be represent. In addition, a large number of implied conditions exist that are not depicted. For example, a relay ladder with twenty elements (switches, relays, solenoids, etc.) embraces well over one million possible combinations of conditions. As a practical matter only a small fraction of these conditions, those necessary to make the system work, are considered by the machine designer and encoded into the logic scheme. Potential problems abound. Some planned conditions may be omitted, and unplanned conditions may be present with serious consequences.

The programmable controller (PC) was introduced with the hope that the massive racks of relays wired together in a permanent logic network could be replaced by a more reliable, smaller and readily reprogrammable electronic package. Although the PC was designed to replace relay controls, its design explicitly set out to replicate, in the design media, the relay ladder logic used by technicians. Reprogrammability has proven to be a mixed blessing. Initial reprogramming is always needed as the system is set up and to meet product design changes. Any change made to the program logic requires a corresponding modification to associated diagnostic programming so the latter can properly reflect errors in the altered logic. The ease of making changes can allow modifications to be made by any semi-qualified person. Unfortunately, there is often no automatic record of changes made, and there is therefore the possibility that the documentation may not reflect the actual program. This is a sufficiently serious problem for many production facilities that they are investing heavily in add-on equipment to monitor program changes. Furthermore, the increase in number of Input/Output (I/O) points desired by users and consequent greater complexity of controls have driven PC manufacturers to push the PC design to larger and larger units. These very large units are well designed to meet the needs of central chemical plant control rooms, for example, but are too slow for the fast-cycle automation, such as transfer lines.

A significant cost of automated production lies in system "down-time" - i.e. time in which the automated system is non-productive - which may range between 50% and 60% during productive shifts. Analyses show that there are many causes of down time including: many potential sources of unintended stoppage, variable delays in bringing the appropriate skills to bear on the problem, repair times that vary from minutes to hours, and a significant time needed to return the machine to a "ready for automatic cycle" condition after all repairs have been made. Downtime is a direct consequence of the high degree of complexity required to perform a large number of machining and part handling operations with the minimum of operator intervention. While lower equipment failure rates are a high priority objective, it is widely believed that reducing time to return to production is the major area of opportunity for improvement.

Summary of the Invention

The present invention is directed to a system and method for controlling operation of a plurality of elements in an automated process, such as a production process, and indicating error conditions as they occur. In accordance with the invention, each unique set of input and output conditions of the various system elements defines a unique logic state or zone. Thus, there are defined a multiplicity of valid system logic states or zones, each having a unique input/output image. A predetermined sequence of zones, productive zones representing designed machine operations, is stored in a zone table. All zones not explicitly defined in the zone table are automatically treated as error zones. A zone engine automatically cycles to observe any change in input/output image. Any change in inputs from the various system elements automatically transfer action to the unique zone associated with such inputs, resulting in corresponding changes in control outputs to the system elements and/or display of an error message as appropriate.

A preferred embodiment of the present invention includes a control system with a logic device such as a microprocessing unit for scanning inputs from system sensing elements, such as limit switches or digitally coded signals, and generating outputs to system elements such as electric motors or indicator lamps. Control action is taken according to the input conditions that define a logic zone. A predetermined sequence of logic zones representing machine operating steps is created and stored in a zone table in the microprocessing unit. Any zone that is not defined explicitly in the table is automatically defined as a fault, and operation is logically vectored to a specific error zone in the zone table. Each new set of input and output conditions is compared with the zone table in the microprocessing unit, and if a mismatch is detected, or if a time in a specific zone is outside the predetermined time limits for that zone, predetermined action is effected (usually stop the machine).

In accordance with another feature of the invention for automatic generation of error messages, each logic zone and each input/output image has associated therewith a verbal description according to its function. Motion or action zones have associated verbs phases, such as "drill slide moving forward" and input and output (I/O) elements are named with nouns such as "forward limit switch", etc. The system continually examines the actions taking place or the lack of action, and the conditions of the system elements. When a fault occurs, i.e. when the combination of action and element conditions does not represent a productive situation, the names of the zones and inputs and outputs are combined to automatically compose a unique readily understood error message complete with verbs, nouns and objects in accordance with standard language construction. If the system is changed by the designer, the diagnostics and error message composition automatically follow with no additional programming. The system will automatically compose its own unique error message in accordance with the changes.

## Brief Description of the Drawings

Figure 1 is a schematic view showing a drilling machine operated with the control system of the present invention.

Figure 2 is a schematic diagram which depicts possible zones in operation of the machine slide of FIG. 1 and illustrates operation of the invention.

Figure 3 is a diagram depicting exemplary devices which produce inputs to the system control logic.

Figure 4 is a diagram depicting outputs from the control logic to actuate various machine mechanisms.

Figure 5 is a pictorial view showing the sequence of zones in FIG. 2 with the positions of the limit switches and the conditions of the motion power indicated. Each zone image is read as a vertical slice in the view.

Figure 6 is a diagrammatic view of Zone 1 in FIGS. 2 and 5 showing upcoming zone possibilities when the machine completes its function in the current zone.

Figure 7 is a diagrammatic view showing sixteen possible zone images with four system elements (two switches and two motor conditions). The zone images are read as vertical slices in the view.

Figure 8 is a fragmentary block diagram of the station computer.

Figure 9 is a schematic diagram and flow chart demonstrating the operation of the system.

Figure 10 is a schematic diagram of an orchestrater computer and a station computer connected in a communication loop with the orchestrater computer presenting error messages on a computer terminal CRT.

Figures 11-16 are pictorial illustrations of zone logic tables for a more complex machine system.

Figure 17 shows the algorithm used to produce diagnostic messages in the system of the present invention. Brackets indicate variables and a block indicates a fixed word.

Figure 18 shows a portion of a CRT screen presenting an error message generated by the system of the present invention.

Figure 19 shows a portion of an Input/Output table present in the command interpreter of the system.

## Detailed Description

The term "mechanism" as used herein is defined to mean a device that produces motion, such as a slide drive motor, a spindle motor or a clamp solenoid valve and cylinder as shown in Figure 4. "Inputs" sense mechanism conditions and send electrical signals to a logic control device. Examples are limit switches, digital coded signals and sensing devices such as shown in Figure 3. "Outputs" are generated by a control logic device and actuate mechanisms as illustrated in Figure 4. The control logic device drives outputs in accordance with the conditions specified in the zone tables as described hereinafter. The following explanation involves a simple drilling machine that automatically moves a rotating drill against a workpiece to drill a hole, withdraws the drill, and returns back to the starting position. The cycle is automatically repeated. It will be appreciated that this relatively simple application of the invention is by way of example only.

Referring to Figure 1, the drilling machine 10 includes a base 12 with a reversible electric motor 16 mounted thereon. Motor 16 has an output shaft 18 coupled through a geared transmission 22 to drive a worm shaft 24. A machine slide 26 is slidably mounted on base 12 in engagement with worm shaft 24. A drill head 28 rotates a drill bit 30 for drilling a hole in a workpiece (not shown). Limit switches 32 and 34 are positioned on machine base 12, and fingers 36 and 38 on slide 26 engage limit switches 32, 34 at the extreme limits of travel of the machine slide. Limit switches 32, 34 are connected to a station computer 40. Motor 16 is powered by a motor controller 54 which provides a feedback signal indicative of motor operation. Controller 54 is coupled to station computer 40. Computer 40 is also connected to a communication loop 41 that contains an orchestrater computer 72.

The general operation of machine 10 requires slide 26 to move off returned limit switch 32 by energizing motor 16 to rotate lead screw 24 and move slide 26 forward until finger 38 engages advanced limit switch 34. At this point motor 16 must be stopped and energized to rotate lead screw 24 in the opposite direction for reversing the direction of travel of machine slide 26 until finger 36 engages limit switch 32. Again motor 16 is energized to move the slide in the advance direction, and so on in continuous cycling. The current in the motor starter coil from line 48 to is sensed in conventional fashion and is fed back to microprocessor 40 to reflect the condition of the motor 16. The condition of the motor starter coil is continually sensed so that the output is confirmed while the current is present.

A control panel 45 is connected to station computer 40 and includes push buttons 47 that indicate functions such as "start drill motor", "advance slide", "single step", "stop drill motor", "return slide", "automatic" and "manual". Push button logic 51 couples control panel 45 to stator computer 40. A relay 52 is connected to station computer 40 to shut down machine 10 if an error is detected.

Referring to Figure 2, the "zones" of operation of drilling machine 10 are represented . In Zone No. 1, machine slide 26 is ADVANCING OFF returned limit switch 32. Zone No. 2 represents the drilling machine slide 26 ADVANCING BETWEEN the limit switches. Zone No. 3 represents drilling machine slide 26 ADVANCED FROM returned limit switch 32 and engaging advanced limit switch 34. Zone No. 4 represents machine slide 26 in ADVANCED position and with slide motor 16 stopped. Zone No. 5 represents machine slide 26 RETURNING OFF advanced limit switch 34. Zone No. 6 represents machine slide 26 RETURNING BETWEEN the limit switches. Zone No. 7 represents machine slide 26 RETURNING FROM advanced limit switch 34 and engaging the returned limit switch 32. Zone 8 represents machine slide 26 RETURNED and motor 16 stopped. Zone No. 0 represents machine slide 26 stopped between limits. As will become apparent from the following discussion, zone description in upper case letters in the preceeding discussion is important in composing error messages.

Figure 5 is a pictorial view showing the zone patterns. The eight possible inputs and eight possible outputs are illustrated. The black or filled blocks represent power (output) or switch (input) "on" and a blank block represent power or switch "off". For example, in Zone 1, input to the station computer 40 is limit switch 32 "on" and limit switch 34 "off". The output from the station computer causes motor controller 54 and motor 16 to move the machine slide in either the advance or return direction. Again, in Zone 1, motor 16 is "on" in the advance direction and "off" in the return direction. Vertical slices through the diagram in Figure 5 represent "images" of each of the nine productive zones.

Figure 6 is a pictorial view showing the mechanism operating in Zone 1. Any change in input or output causes a zone change. Figure 6 demonstrates that the only productive operating zone to follow Zone 1 is Zone 2. Any other zone is undefined in the zone table of FIG. 7, and therefore is interrupted as in error zone. All the possible combinations of conditions do not have to be anticipated because the system operating zones have been constrained during programming to those planned. For purposes of explanation, those zones relative to the planned operation steps of the machine during error free operation, have been defined as "productive zones". Only the productive zones need to be considered. For example, if the inputs show both limit switches 32 and 34 "on", this is automatically an error zone because such conditions are not present in the programmed zones (FIG. 5). The various combinations can be quickly entered into a zone logic table by defining all productive zones plus at least one error zone. The error zone may issue a shut down signal to the system. With two limit switches and two motor directions, there are only sixteen possible physical combinations, as shown in Figure 7. The number of possible combinations is two (on/off) mathematically taken to the power of the number of on-off devices present.

Figure 8 is a block diagram of station computer 40. A block of RAM 58 includes I/O memory, timer memory 64, zone data table memory 66, and "flight recorder" and journal memories 68, 70. Station computer 40 includes an MPU 42 which communicates with memory 58 via the address bus 59 and the data bus 60. The program for executing station operation is stored in command interpreter EPROM 61. An oscillator 62 supplies the clock function. MPU 42 executes the program in EPROM 61 and carries out the system functions shown in Figure 5.

Upon entry into a new zone, zone engine MPU 42 takes the following action: write the new zone number and related information to flight recorder memory 68, set an internal zone timer to zero, and set the physical outputs as indicated by the zone table. For example, upon entry into Zone 1 (FIG. 5), MPU 42 energizes in the advance direction. Zone engine MPU then continues to motor the I/O image from and to limit switches 32, 34, monitor controller 54 and motor 60, and to compare this information to the zone image in Zone 1. In the event of a change of I/O indicia, MPU 42 automatically steps to the appropriate zone reflecting the new I/O image - i.e. Zone 2 in the event of proper operation (FIG. 6), or an error zone if the latter is appropriate. In the event of proper operation, the entire cycle repeats continuously.

Timer memory 64 checks the time in zone against minimum and maximum times for that zone stored in zone data table 66. Flight recorder memory 68 records the history of zones over a number of zone changes, such as one thousand zone changes for example, and continually over-writes this data to reflect the last one thousand zone changes. This data is useful in analysis of an error, e.g. to determine that the machine has been slowly deteriorating. Journal memory 70 records error information continually from start-up of the system. A user can examiner error history in previous months or years. A copy of the journal or flight recorder can be sent to the screen of terminal 69, or a hard copy can be produced at printer 71 in accordance with the program in EPROM 61.

Figure 9 demonstrates operation of the system for drill station 10, including the zone timer as logic "inputs", for Zones 1-4 and 99. The outputs SLIDE MOTOR ADVANCE and SLIDE MOTOR RETURN, and the inputs SLIDE RETURNED LIMIT SWITCH and SLIDE ADVANCED LIMIT SWITCH are listed along the top, along with MINIMUM TIME IN ZONE and MAXIMUM TIME IN ZONE. The zone functions are listed along the left side, with the zone numbers beside the function names. One zone function is identified as ERROR Zone 99. The zone image for each of the operating zones is presented in a horizontal slice of the chart next to the zone name and number. The hatched lines indicate which inputs and which outputs are turned "on" (hatched) and "off" (unhatched) in each zone. For example, in Zone 1, the SLIDE MOTOR ADVANCE output and the RETURNED LIMIT SWITCH input are "on". Output SLIDE MOTOR RETURN and input SLIDE ADVANCED LIMIT SWITCH are "off". For demonstration purposes, the table of FIG. 9 also shows all operations having two seconds minimum time and four seconds maximum time in zone.

Figure 9 also illustrates zone transfer in the event of a change in input or output state. For example, in Zone 1, it is expected that SLIDE ADVANCED LIMIT SWITCH input will change from "on" to "off", whereby zone logic will transfer to Zone 2. Any other I/O change is an error, and logic transfers to error Zone 99. Likewise, in Zone 2, it is expected that the next I/O change will be activation of SLIDE ADVANCED LIMIT SWITCH, whereby logic transfers to Zone 3. Note that only one I/O signal changes between Zones. MINIMUM TIME and MAXIMUM TIME blocks are checking the times in zone. The numbers "2" and "4" represent the acceptable times. The blocks also show the number "99" to indicate that, if less than minimum or more than maximum time in the zone is experienced, the system transfers to Zone 99 and shuts down the machine.

A flow diagram is interposed between Zone 1 and Zone 2 to show the flow of events (the flow between other zones being similar). The number "2" in a circle (circle meaning from "on" to "off") in the SLIDE RETURNED LIMIT SWITCH block of Zone 1 indicates that, when this input changes due to the SLIDE RETURNED LIMIT SWITCH turning off, the logic attempts to transfer the machine into Zone 2. First, the time in zone is compared with the minimum time in zone to make certain that the machine has been in Zone 1 for at least the minimum required time. Then, the time in zone is compared with the maximum permitted time in zone to make certain that the maximum time has not been exceeded. These two zone timer values effectively form a window in which the function of a zone must take place.

Next the zone engine writes the Zone 1 image into the flight recorder along with the I/O image that caused the exit from Zone 1. Taking SLIDE MOTOR ADVANCE as the leftmost bit of the six bits (inputs and outputs listed at the top of the chart) in the zone and MAXIMUM TIME as the rightmost bit, the zone image is written into the flight recorder as "101000" with "1" representing "on" and "0" representing "off". The flight recorder now has a record that the machine has been in Zone 1, and the conditions that existed in Zone 1. Next, the machine slide will move off the returned limit switch and this bit will change form "on" to "off" establishing Zone 2 conditions. At this point, if a change in output was required, it would occur. It so happens that transfer from Zone 1 to Zone 2 does not require a change in output--only the inputs changed requiring a new zone to be defined. The push button lights for Zone 2 are turned on and latched. Next, the zone engine continually checks Zone 2 conditions until there is a change in input, or a change in output if something in the output system has failed. When a change occurs, the process is repeated, and the process proceeds as planned on through the cycle of the zones and starts again with Zone 1.

Looking at Zone 2, it will be apparent that the SLIDE MOTOR ADVANCE output block shows "on" and all other blocks show "off", and that SLIDE ADVANCED LIMIT SWITCH must change from "off" to "on" for the system to advance to Zone 3. When feedback from slide motor 10 turns off, transition to Zone 4 occurs.

The flight recorder memory maintains a record or history of all zones through which the mechanism has traveled. If an error zone has occurred, the bit pattern "000000" will be written into the flight recorder, and the input and output conditions leading up to the error are retained for diagnostic purposes. This is an important diagnostic tool. Upon occurrence of an error zone, any action that has been determined in advance can be taken. Several error zones can be used with different actions, or no action, taking place in some error zones. All combinations of input and output are mathematically guaranteed to be handled. Only the programmed zone images will be allowed to proceed, with established minimum and maximum times in zone. Any other combinations of input and output will result in transition to an error zone that may or may not cause the mechanism to stop. Only inputs and outputs for carrying out the machine operation need to be considered in creating the zone table. All other combinations are misfits resulting in transition to an error zone.

As previously stated, the logic is organized into functional blocks or zones that are named according to the physical machine action taking place. These names are used by the diagnostic process to identify the action taking place in the machine when a fault occurs. The input and output devices are also given descriptive names by the programmer, which facilitates the diagnostic process of creating meaningful messages such as "WHILE DRILL SLIDE ADVANCING RETURNED LIMIT SWITCH CAME ON UNEXPECTEDLY".

Figure 10 is a schematic diagram which illustrates this diagnostic feature of the present invention. Station computer 40 communicates with orchestrater computer 72 on loop 41. When an error occurs at the station, orchestrater computer 72 interrogates the memory of station computer 40 and receives bit patterns indicating the error. These bit patterns are fed into a command interpreter 74, which translates the bit pattern into words and phrases according to a preprogrammed table 75 in its memory, and combines these words and phrases into an understandable message. The message is then displayed on the CRT screen of the terminal 76. Assume, for example, that returned limit switch 32 closes while the machine slide is advancing - i.e. while operating in Zone 2. Since this is not defined as a regular condition to be expected in Zone 2, an error is indicated. Orchestrater computer 72 interrogates station computer 40, and the latter sends a bit pattern such as 00010100 that translates in the command interpreter into "while" and "slide advancing" and into "returned limit switch turned on" and "unexpectedly". The message that appears on the terminal screen is "WHILE DRILL SLIDE ADVANCING RETURNED LIMIT SWITCH CLOSED UNEXPECTEDLY". Thus, command interpreter 74 and preprogrammed tables 75 together comprise an error message composer which automatically associates predefined text with the error message received from the station computer. It will be noted in particular that this feature of the invention coordinates with the use of predefined zone logic as hereinabove described since examination of the zone image and unexpected event effectively defines the error message. The system thus presents the diagnosis of the problem in a standard language readily understood by humans. An operator immediately identifies the fault without further thought or interpretation of logic consequences of relay contacts. It will be appreciated that the error messages themselves are not preprogrammed, only individual message segments associated with specific conditions. Thus, the designer need not consider all possible combination of errors.

An algorithm for composing an error message is shown in Figure 17. Variables are shown in brackets and fixed information - i.e. "WHILE" - is shown in blocks. Zone names are selected from the zone logic table. The name of the offending bit is taken from the I/O listings of the tables. The zone engine extracts these names by identifying the zone and proceeding across the I/O element image to locate the erroneous condition. An I/O table contained in the command interpreter is illustrated in Figure 19. An example of an error message is shown in Figure 18. The I/O table shown in Figure 19 has a few entries for demonstration purposes. This table shows the name of the I/O device, the station where it is located, the slot number in the panel where the I/O device is located, and the wire number connected to that I/O device. Each of the I/O slots and wires is labeled. The physical arrangement of these I/O devices and wires is shown in co-pending patent application "Control Station including a conductively Isolated Depluggable Controller"--R. T. Lovrenich. If a machine transfers from Zone 1 to Zone 3 for example when it should transfer to Zone 2, it will first transfer to Zone 3 as instructed, but seeing the wrong set of input and output conditions it will exit to the error zone. In the meantime it will have exited Zone 16 too quickly and violated the minimum time in zone. This stops the program and generates a message "unexpected zone".

Figures 11-16 of the drawings illustrate the use of a zone logic table when designing a more complex production line. The tables has been completed to operate a system having an orchestrater computer, a drill station with a slide and a rotating spindle, a transfer station, and a clamp station. In practice more work stations, such as milling machines, gages, etc. may be involved. However, the demonstration is limited to one work station for sake of simplicity. Zones are listed by their names along the left side of the tables and I/O functions are listed along the top of the tables. This represents the entire design of the system. It is done in plain language. A complete production line is classified as a "machine"; a station is classified as a "station"; and a mechanical device is classified as a "mechanism". Mechanisms are combined to form a station and stations are combined to form a machine. Use of the "standard" zone logic table form as shown in the drawings to design individual station logic will be self-evident from FIGS. 11-16 in view of the preceeding discussion.

The invention claimed is:

Claims

1.

A machine control system which comprises, in combination, a machine (10) including means (16 through 26) for producing motion at said machine and means (32, 34) for sensing machine conditions, and control means (40) responsive to predefined inputs from said condition-sensing means for providing predefined outputs to said motion-producing means, characterized in that said control means (40) comprises

means (FIG. 5) for tabulating said predefined inputs and outputs in a sequence of combinations representative of a preselected sequence of operations of said machine, each said combination representing a unique input/output image indicative of a corresponding zone in said sequence,

means (FIG. 9) for continuously monitoring said inputs and outputs, and responsive to a change in said inputs and outputs to formulate a corresponding new zone image,

means (FIG. 9) for comparing said new zone image to the zone image indicative of the next zone in said sequence, and

means (FIG. 10)for indicating an error condition in the event that said new zone image does not match that of said next zone in said sequence.

2.

The system set forth in claim 1 wherein said tabulating means includes means (FIG. 9) for establishing minimum and maximum operating times in each zone in said sequence,

wherein said comparing means includes means for measuring time of operation within each zone in said sequence and means for comparing said time of operation to said maximum and minimum times, and

wherein said error-indicating (FIG. 10) means includes means for indicating a said error condition in response to a said change in said inputs and outputs when time of operation in the corresponding said zone is outside of said maximum and minimum times.

3.

The system set forth in claims 1 or 2 wherein said error condition - indicating means (FIG. 10) includes means (40) for providing an error signal indicative of input and output conditions at said machine upon detector of an error condition, and means (72, 76) responsive to said error signal for formulating and displaying an error message indicative of said error condition.

4.

The system set forth in claim 3 wherein message-formulating means (72, 76) includes a table (75) of predefined error message segments corresponding to possible error conditions at said machine, and means (74) responsive to said error signal for gathering error message segments from said table as a function of said error signal and thereby formulating said error message.

5.

The system set forth in claim 4 wherein said error signal - providing means (40) includes means for providing said error signal as a series of binary signals in predetermined sequence corresponding to input and output conditions at said machine, and

wherein said message-formulating means (74) includes means responsive to each binary signal in said error signal to obtain a corresponding error message segment from said error message table, sequence of said error message segments in said error message corresponding to sequence of said binary signals in said error signal.

6.

The system set forth in claim 5 wherein said error message - displaying means (76) comprises a CRT display.

7.

A method of operating a machine (10) capable of performing a multiplicity of physical operations in a preselected sequence of said operations wherein machine operation is controlled through input and output devices (16, 32, 34), said method comprising the steps of:

establishing a sequence of machine operations defined by a sequence of operating zones, each said operating zone having a corresponding zone image of inputs and outputs from said devices,

continually monitoring all inputs and outputs from said devices in each step in said sequence of machine operations and comparing said inputs and outputs to the zone image associated with said step,

advancing machine operation to the next step in said sequence when a change in said inputs and outputs produces a zone image corresponding to said next step, and

indicating an error condition when a change in said inputs and outputs produces a zone image other than that corresponding to said next step.

8.

The method set forth in claim 7 comprising the additional steps of:

monitoring time of operation in each said operating zone,

comparing time of operation in each said zone to predetermined maximum and minimum times associated with said operating zone, and

indicating a said error condition when said time of operation is greater than the associated said maximum time less than the associated said minimum time.

9.

The method set forth in claim 7 or 8 comprising the additional steps of:

storing a plurality of predetermined message segments in plain text corresponding to actions to be taken in said zones and associated input and output conditions at said machine,

establishing an error signal in response to an indication of error condition, said error signal including segments reflecting input and output conditions at said machine in predetermined sequence upon detection of a said error condition,

composing an error message as a sequence of message segments corresponding to and in the order of said error signal segments, and

displaying said error message.

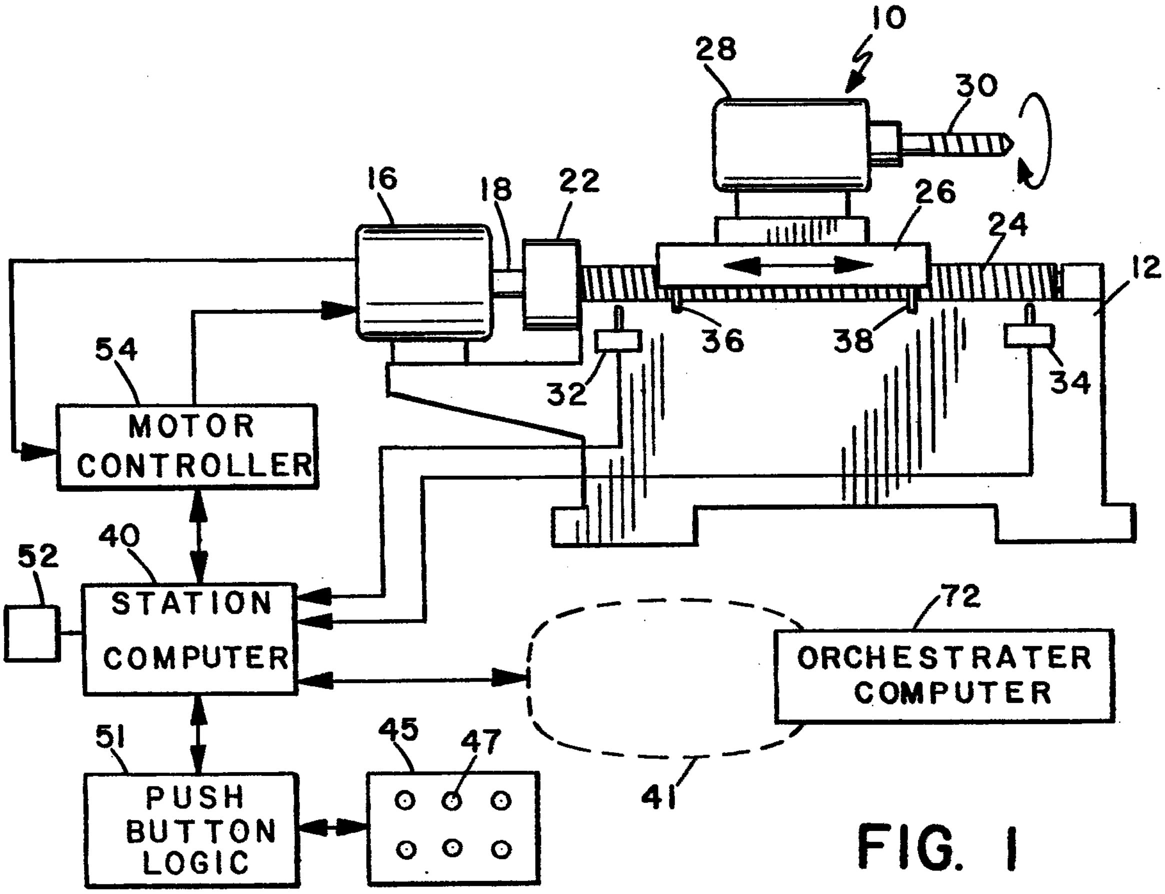
10
28
30
16
18
22
26
24
12
36
38
32
34
54
MOTOR CONTROLLER
40
52
STATION COMPUTER
72
ORCHESTRATER COMPUTER
51
45
47
PUSH BUTTON LOGIC
41

FIG. 1

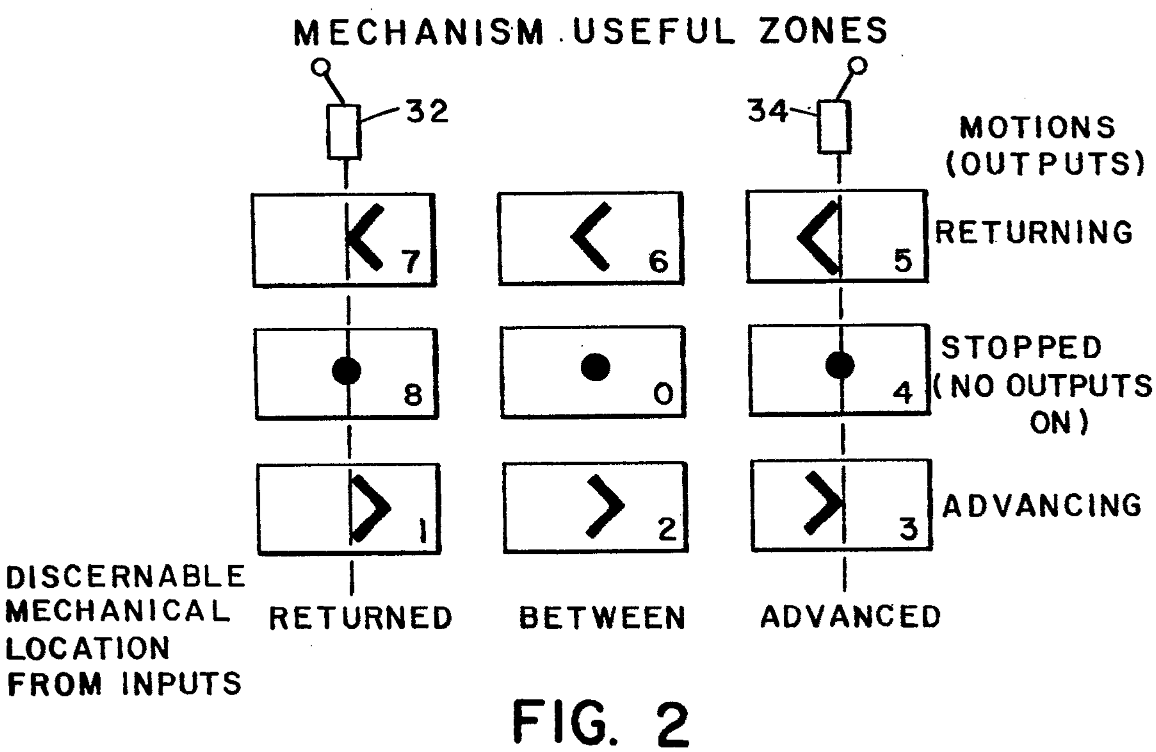
MECHANISM USEFUL ZONES
32
34
MOTIONS (OUTPUTS)
7
6
5
RETURNING
8
0
4
STOPPED (NO OUTPUTS ON)
1
2
3
ADVANCING
DISCERNABLE MECHANICAL LOCATION FROM INPUTS
RETURNED
BETWEEN
ADVANCED

FIG. 2

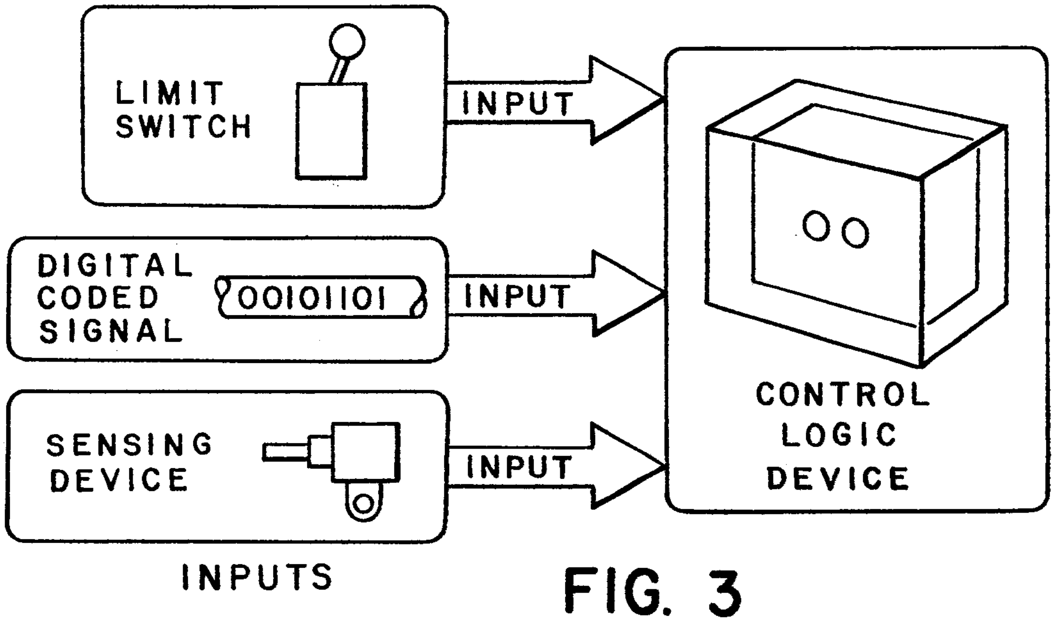
LIMIT SWITCH
INPUT
DIGITAL CODED SIGNAL
00101101
INPUT
SENSING DEVICE
INPUT
CONTROL LOGIC DEVICE
INPUTS

FIG. 3

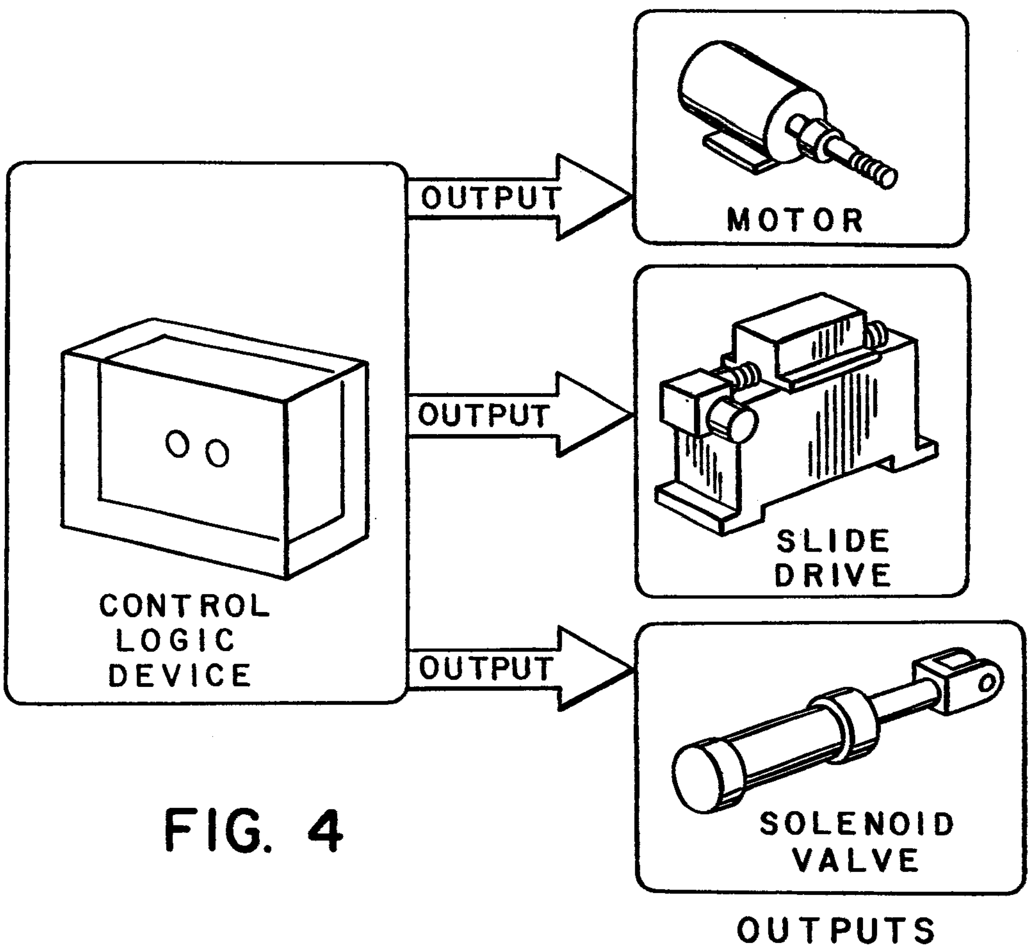
OUTPUT
MOTOR
OUTPUT
SLIDE DRIVE
CONTROL LOGIC DEVICE
OUTPUT
SOLENOID VALVE
OUTPUTS

FIG. 4

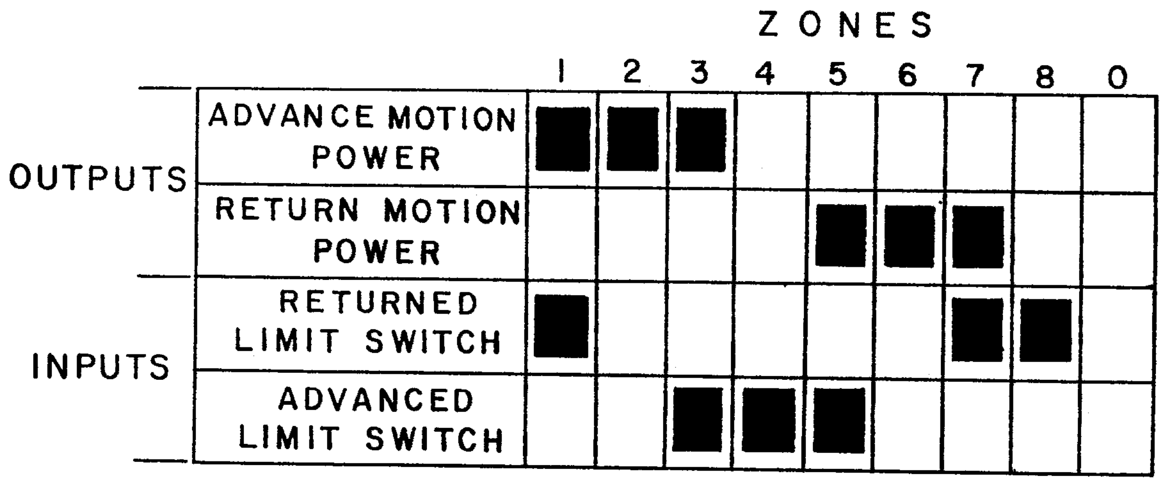
ZONES
1 2 3 4 5 6 7 8 0
OUTPUTS
ADVANCE MOTION POWER
RETURN MOTION POWER
INPUTS
RETURNED LIMIT SWITCH
ADVANCED LIMIT SWITCH

FIG. 5

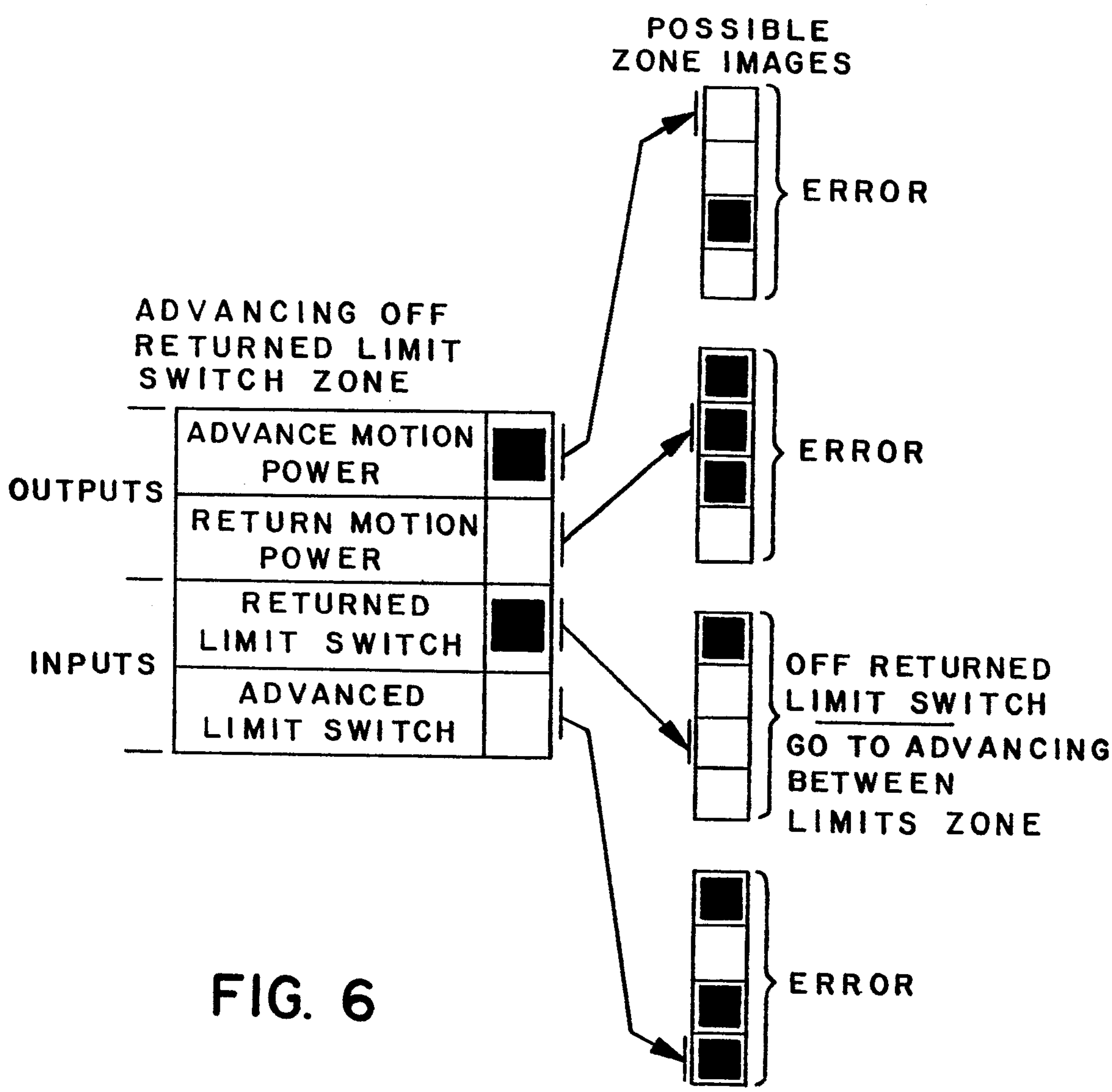
POSSIBLE ZONE IMAGES
ERROR
ADVANCING OFF RETURNED LIMIT SWITCH ZONE
OUTPUTS
ADVANCE MOTION POWER
RETURN MOTION POWER
INPUTS
RETURNED LIMIT SWITCH
ADVANCED LIMIT SWITCH
ERROR
OFF RETURNED LIMIT SWITCH
GO TO ADVANCING BETWEEN LIMITS ZONE
ERROR

FIG. 6

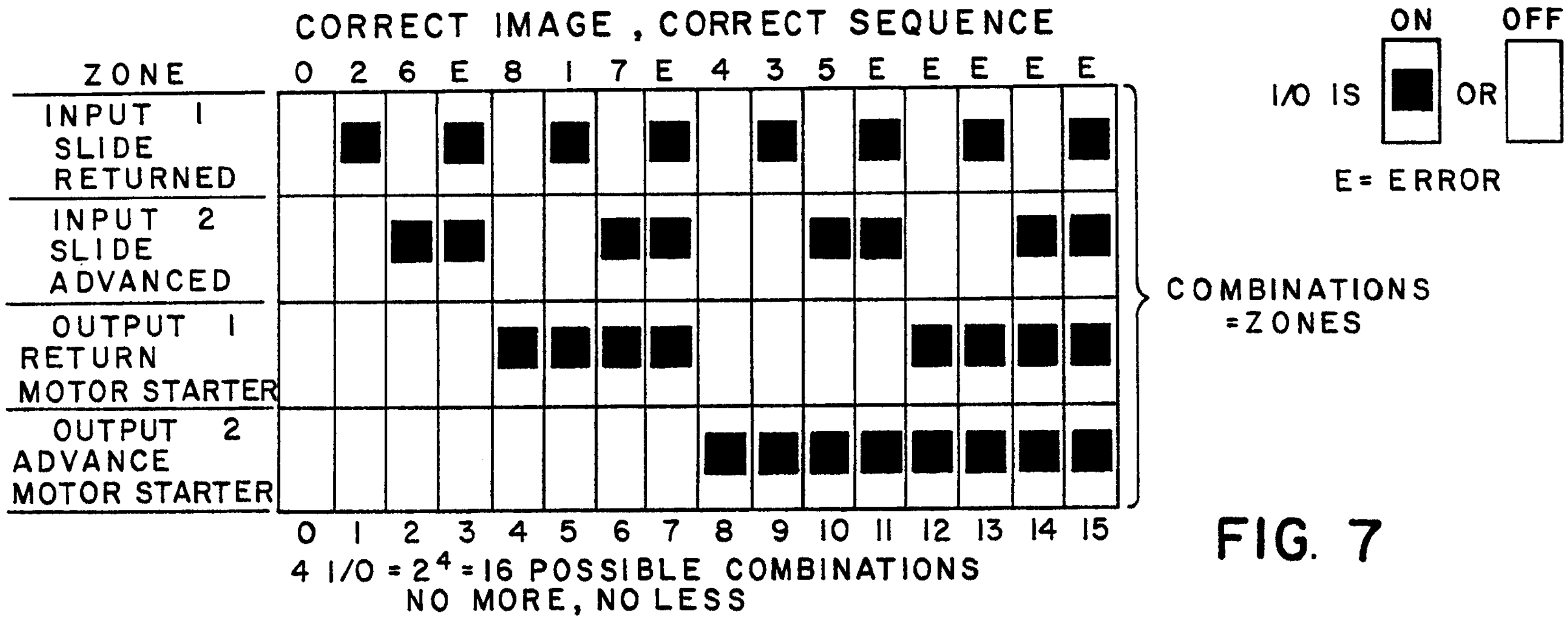
CORRECT IMAGE, CORRECT SEQUENCE
ZONE
0 2 6 E 8 1 7 E 4 3 5 E E E E E
INPUT 1 SLIDE RETURNED
INPUT 2 SLIDE ADVANCED
OUTPUT 1 RETURN MOTOR STARTER
OUTPUT 2 ADVANCE MOTOR STARTER
0 1 2 3 4 5 6 7 8 9 10 11 12 13 14 15
4 I/O = $2^4$ = 16 POSSIBLE COMBINATIONS
NO MORE, NO LESS
COMBINATIONS = ZONES
I/O IS
ON
OR
OFF
E = ERROR

FIG. 7

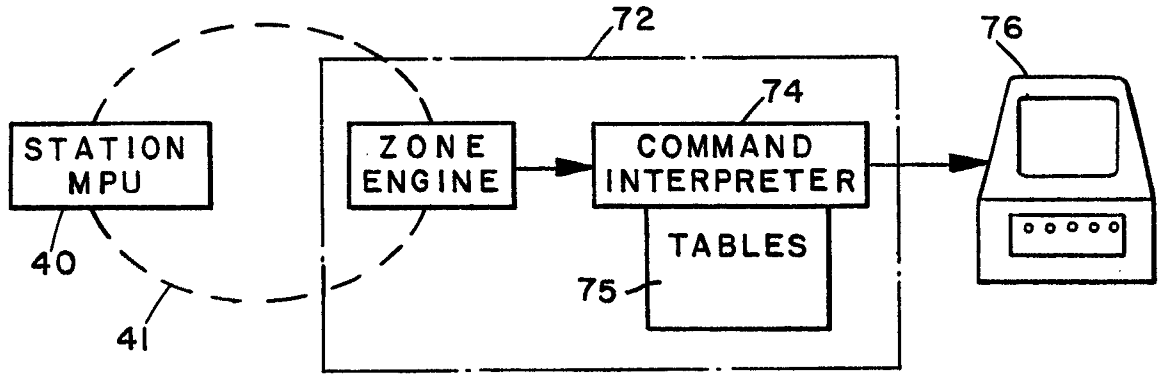
STATION MPU
40
41
72
ZONE ENGINE
74
COMMAND INTERPRETER
TABLES
75
76

FIG. 10

0208997

5/11

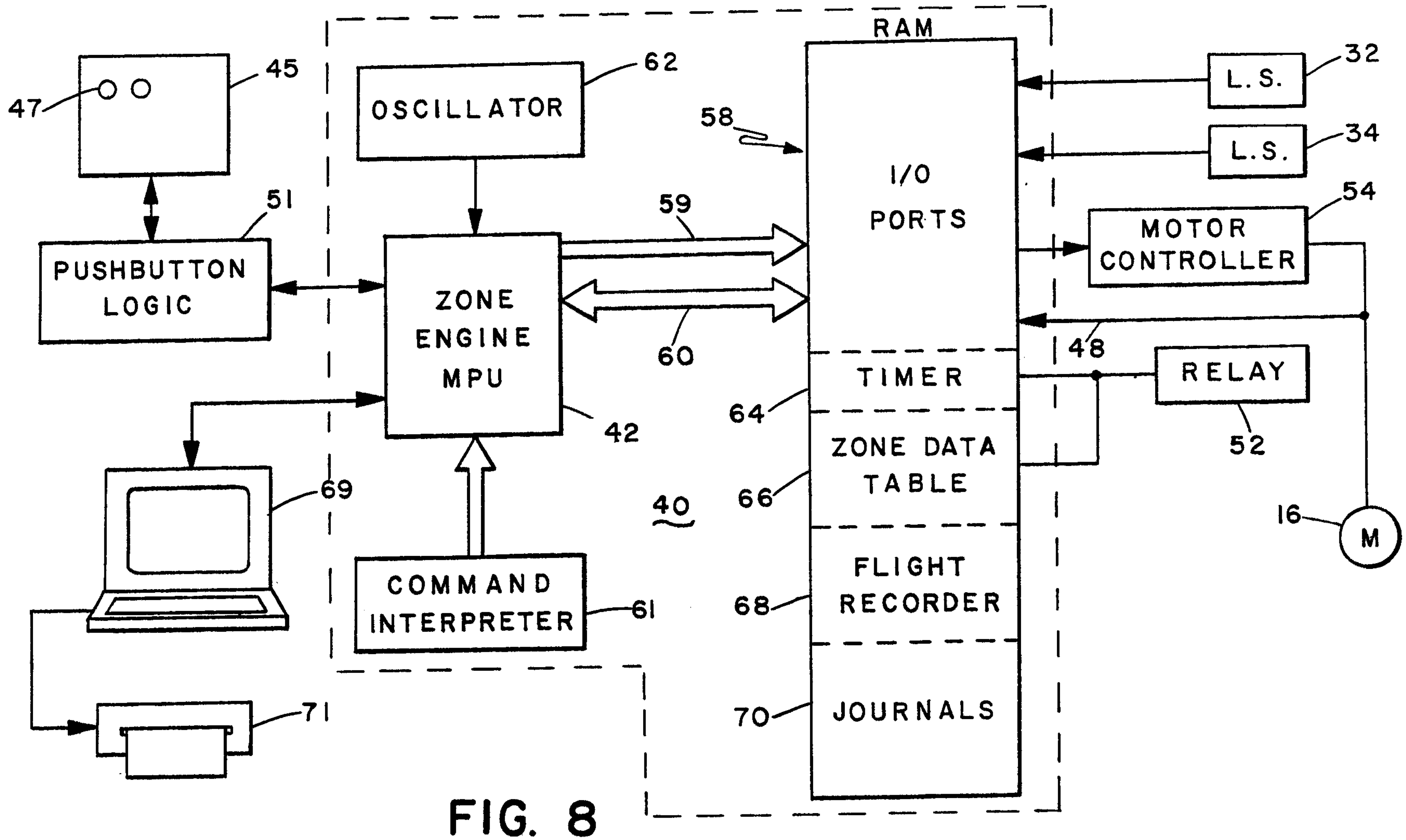


FIG. 8

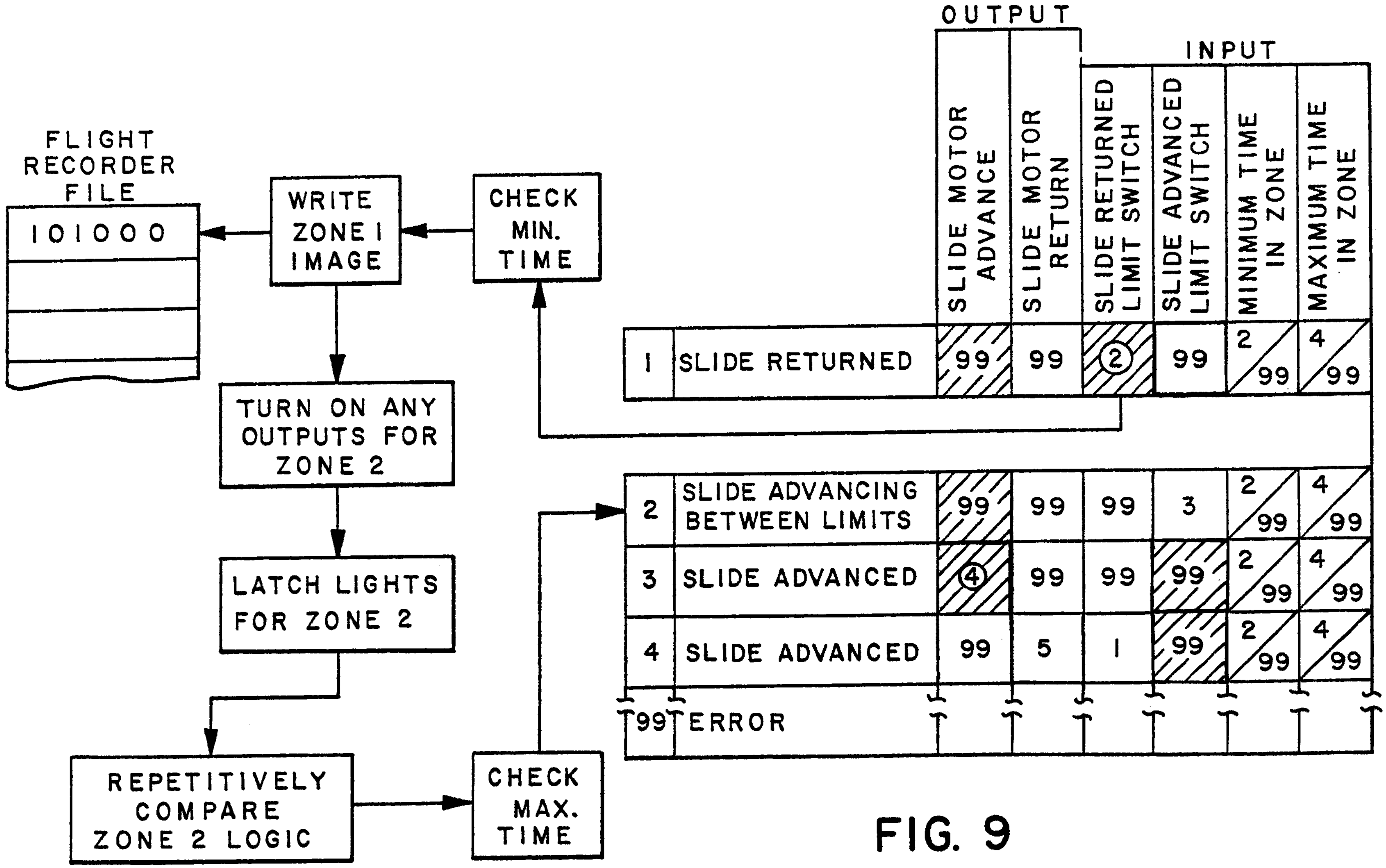
FLIGHT RECORDER FILE
101000
WRITE ZONE 1 IMAGE
CHECK MIN. TIME
TURN ON ANY OUTPUTS FOR ZONE 2
LATCH LIGHTS FOR ZONE 2
REPETITIVELY COMPARE ZONE 2 LOGIC
CHECK MAX. TIME
OUTPUT
INPUT
SLIDE MOTOR ADVANCE
SLIDE MOTOR RETURN
SLIDE RETURNED LIMIT SWITCH
SLIDE ADVANCED LIMIT SWITCH
MINIMUM TIME IN ZONE
MAXIMUM TIME IN ZONE
1 SLIDE RETURNED 99 99 2 99 2 99 4 99
2 SLIDE ADVANCING BETWEEN LIMITS 99 99 99 3 2 99 4 99
3 SLIDE ADVANCED 4 99 99 99 2 99 4 99
4 SLIDE ADVANCED 99 5 1 99 2 99 4 99
99 ERROR

FIG. 9

7/11 0208997

# ZONE LOGIC FLOW TABLE

NAME: ENGINE HEAD LINE DRILL STATION 5L SLIDE (CIRCLE ONE) ~~MECHANISM~~ (circled) STATION MACHINE

| ZONE NAMES | ZONE NUMBER (REF) | RETURNED LIMIT SW. | ADVANCED LIMIT SW. | CYCLE HEADS CMD | EMERGENCY STOP CMD | ADVANCE PUSH BTN. | RETURN PUSH BTN. | HOME COMMAND | | | NOT HOME | CYCLE COMPLETE | ADVANCE SOLENOID | RETURN SOLENOID | ZONE MIN. SEC | OR GO TO ZONE | ZONE MAX SEC | OR GO TO ZONE |
|---|---|---|---|---|---|---|---|---|---|---|---|---|---|---|---|---|---|---|
| INPUT I / OUTPUT O | | I | I | I | I | I | I | I | | | O | O | O | O | | | | |
| PHYSICAL P / LOGICAL L | | P | P | L | L | P | P | L | | | L | L | P | P | | | | |
| SLIDE RETURNED - WAITING CYCLE CMD | 1 | 26 | 26 | 2 | 24 | 26 | 26 | 26 | | | 26 | X | 26 | 27 | | | | |
| SLIDE RETURNED - ADVANCING | 2 | (3) | 26 | 27 | 24 | 1 | 1 | 26 | | | 26 | 26 | X | 27 | .1 | 27 | 5 | 26 |
| SLIDE ADVANCING | 3 | 26 | 4 | 27 | 24 | 1 | 1 | 26 | | | 26 | 26 | X | 27 | 4 | 27 | 6 | 27 |
| SLIDE ADVANCED (DELAY) | 4 | 26 | 26 | 26 | 24 | 1 | 1 | 26 | | | 26 | 26 | 26 | 27 | | | .1 | 5 |
| SLIDE ADVANCED - RETURNING | 5 | 26 | (6) | 26 | 24 | 1 | 1 | 26 | | | 26 | 26 | 26 | X | .1 | 27 | 5 | 26 |
| SLIDE RETURNING | 6 | 1 | 26 | 26 | 24 | 1 | 1 | 26 | | | 26 | 26 | 26 | X | 4 | 27 | 6 | 27 |
| | 7 | | | | | | | | | | | | | | | | | |
| SLIDE RETURNED - STOPPED | 8 | (11) | 14 | 26 | 24 | 9 | 1 | 19 | | | 26 | X | 26 | 27 | | | | |
| SLIDE RETURNED - ADVANCING | 9 | X | 14 | 26 | 24 | 1 | 1 | 26 | | | X | 26 | X | X | | | | |
| SLIDE RETURNED - RETURNING | 10 | X | 26 | 26 | 24 | 1 | 1 | 26 | | | X | 26 | 26 | X | | | | |
| SLIDE BETWEEN LIMITS STOPPED | 11 | 8 | 26 | 26 | 24 | 12 | 13 | 21 | | | X | 26 | 26 | 27 | | | | |
| SLIDE BETWEEN LIMITS ADVANCING | 12 | 26 | 16 | 26 | 24 | 1 | 1 | 26 | | | X | 26 | X | 27 | | | | |
| SLIDE BETWEEN LIMITS RETURNING | 13 | 10 | 26 | 26 | 24 | 1 | 1 | 26 | | | X | 26 | 26 | X | | | | |
| SLIDE ADVANCED - STOPPED | 14 | 10 | X | 26 | 24 | 1 | 1 | 20 | | | X | 26 | 26 | 27 | | | | |
| SLIDE ADVANCED - RETURNING | 15 | 10 | X | 26 | 24 | 1 | 1 | 20 | | | X | 26 | 26 | X | | | | |
| SLIDE ADVANCED - ADVANCING | 16 | 26 | X | 26 | 24 | 1 | 1 | 20 | | | X | 26 | X | 27 | | | | |
| | 17 | | | | | | | | | | | | | | | | | |
| | 18 | | | | | | | | | | | | | | | | | |
| SLIDE RETURNED - STOPPED | 19 | 1 | 26 | 27 | 24 | 26 | 26 | X | | | 26 | X | 26 | 27 | | | | |
| SLIDE ADVANCED | 20 | 19 | (21) | 26 | 24 | 26 | 26 | X | | | X | 26 | 26 | X | | | | |
| SLIDE BETWEEN LIMITS | 21 | 19 | 26 | 26 | 24 | 26 | 26 | X | | | X | 26 | 26 | X | | | | |
| | 22 | | | | | | | | | | | | | | | | | |
| | 23 | | | | | | | | | | | | | | | | | |
| EMERGENCY STOP | 24 | | | | | | | | | | | | | | | | | |
| | 25 | | | | | | | | | | | | | | | | | |
| ERROR ZONE A | 26 | | | | | | | | | | | | | | | | | |
| ERROR ZONE B | 27 | | | | | | | | | | | | | | | | | |

LEGEND

- [16] GO TO ZONE 16 WHEN SIGNAL COMES ON
- (11) GO TO ZONE 11 WHEN SIGNAL GOES OFF
- [18] GO TO ZONE 18 WHEN SIGNAL COMES ON, DON'T RESET ZONE TIMER
- [(7)] GO TO ZONE 7 WHEN SIGNAL GOES OFF, DON'T RESET ZONE TIMER

FIG. 11

**ZONE LOGIC FLOW TABLE**

ENGINE HEAD LINE

NAME ST. 5L-DRILL STATION

(CIRCLE ONE) MECHANISM / (STATION) / MACHINE

| ZONE NAMES | ZONE NUMBER (REF) | CYCLE HEADS CMD | CYCLE COMPLETE CMD | | | | | | | | | | CYCLE HEADS CMD | STOP SPINDLE CMD | | | | |
|---|---|---|---|---|---|---|---|---|---|---|---|---|---|---|---|---|---|---|
| INPUT I / OUTPUT O | | I | I | | | | | | | | | | O | O | | | | |
| PHYSICAL P / LOGICAL L | | L | L | | | | | | | | | | L | L | | | | |
| WAITING TO CYCLE DRILL HEAD | 1 | 2 | 4 | | | | | | | | | | 4 | X | | | | |
| CYCLED DRILL HEAD | 2 | 4 | 2 | | | | | | | | | | X | 4 | | | | |
| | 3 | | | | | | | | | | | | | | | | | |
| ERROR | 4 | | | | | | | | | | | | | | | | | |
| | 5 | | | | | | | | | | | | | | | | | |

FIG. 12

**ZONE LOGIC FLOW TABLE**

ENGINE HEAD LINE

NAME ORCHESTRATER

(CIRCLE ONE) MECHANISM / STATION / (MACHINE)

* MACHINE COMES UP IN MANUAL

| ZONE NAMES | ZONE NUMBER (REF) | DON'T TRANSFER | DON'T CLAMP | DON'T CYCLE HEADS | DON'T UNCLAMP | NOT HOME | AUTO PUSHBUTTON | HOME PUSHBUTTON | | HOME CMD | TRANSFER CMD | CLAMP CMD | CYCLE HEADS CMD | UNCLAMP CMD | | | | |
|---|---|---|---|---|---|---|---|---|---|---|---|---|---|---|---|---|---|---|
| INPUT I / OUTPUT O | | I | I | I | I | I | I | I | | O | O | O | O | O | | | | |
| PHYSICAL P / LOGICAL L | | L | L | L | L | L | P | P | | L | L | L | L | L | | | | |
| TRANSFER | 1 | 12 | (2) | X | X | 12 | 1 | 1 | | 12 | X | 12 | 12 | 12 | | | | |
| CLAMP | 2 | X | 12 | X | X | 12 | 1 | 1 | | 12 | 12 | X | 12 | 12 | | | | |
| CYCLE HEADS | 3 | X | X | 12 | (4) | 12 | 1 | 1 | | 12 | 12 | 12 | X | 12 | | | | |
| UNCLAMP | 4 | (1) | X | X | 12 | 12 | 1 | 1 | | 12 | 12 | 12 | 12 | X | | | | |
| HOMING | 5 | 1 | 1 | 1 | 1 | (7) | 1 | X | | X | 12 | 12 | 12 | 12 | | | | |
| MANUAL * | 6 | 1 | 1 | 1 | 1 | 1 | 1 | 5 | | X | 12 | 12 | 12 | 12 | | | | |
| READY FOR AUTO | 7 | 1 | 1 | 1 | 1 | 1 | 1 | 1 | | 12 | 12 | 12 | 12 | 12 | | | | |
| | 8 | | | | | | | | | | | | | | | | | |
| | 9 | | | | | | | | | | | | | | | | | |
| | 10 | | | | | | | | | | | | | | | | | |
| | 11 | | | | | | | | | | | | | | | | | |
| ERROR | 12 | | | | | | | | | | | | | | | | | |
| | 13 | | | | | | | | | | | | | | | | | |

FIG. 13

0208997

| ZONE LOGIC FLOW TABLE | | NAME: ENGINE HEAD LINE DRILL STATION 5L SPINDLE MOTOR | | | | | | | | | | | | (CIRCLE ONE) (MECHANISM) STATION MACHINE | | | | |
|---|---|---|---|---|---|---|---|---|---|---|---|---|---|---|---|---|---|---|
| ZONE NAMES | ZONE NUMBER (REF) | SPINDLE ON P.B. | SPINDLE OFF P.B. | SPINDLE STOP CMD | CYCLE HEADS CMD | | | | | | | | | SPINDLE MOTOR STARTER | | | | |
| INPUT I / OUTPUT O | | I | I | I | I | | | | | | | | | | | | | |
| PHYSICAL P / LOGICAL L | | P | P | L | L | | | | | | | | | | | | | |
| SPINDLE OFF | 1 | I | I | I | 2 | | | | | | | | | | | | | |
| SPINDLE ON | 2 | I | I | I | I | | | | | | | | | X | | | | |
| | 3 | | | | | | | | | | | | | | | | | |
| | 4 | | | | | | | | | | | | | | | | | |

FIG. 14

| ZONE LOGIC FLOW TABLE | | NAME: ENGINE HEAD LINE CLAMP STATION | | | | | | | | | | | | (CIRCLE ONE) MECHANISM (STATION) MACHINE | | | | |
|---|---|---|---|---|---|---|---|---|---|---|---|---|---|---|---|---|---|---|
| ZONE NAMES | ZONE NUMBER (REF) | CLAMPED LIMIT SW | UNCLAMPED LIMIT SW | CLAMP COMMAND | UNCLAMP COMMAND | | | | | | CLAMP SOLENOID | UNCLAMP SOLENOID | DON'T TRANSFER | DON'T CYCLE HEADS | | | | |
| INPUT I / OUTPUT O | | I | I | I | I | | | | | | O | O | O | O | | | | |
| PHYSICAL P / LOGICAL L | | P | P | L | L | | | | | | P | P | L | L | | | | |
| CLAMP UNCLAMPED AND CLAMPING | 1 | 10 | (2) | X | 10 | | | | | | X | 10 | X | X | | | | |
| CLAMP CLAMPING | 2 | 3 | 10 | 10 | 10 | | | | | | X | 10 | X | X | | | | |
| CLAMP CLAMPED | 3 | (10) | 10 | 10 | 4 | | | | | | X | 10 | X | X | | | | |
| CLAMP CLAMPED AND UNCLAMPING | 4 | (5) | 10 | 10 | 10 | | | | | | 10 | X | X | X | | | | |
| CLAMP UNCLAMPING | 5 | 10 | 6 | 10 | 10 | | | | | | 10 | X | X | X | | | | |
| CLAMP UNCLAMPED | 6 | 10 | 1 | 10 | 10 | | | | | | 10 | X | X | X | | | | |
| | 7 | | | | | | | | | | | | | | | | | |
| | 8 | | | | | | | | | | | | | | | | | |
| | 9 | | | | | | | | | | | | | | | | | |
| ERROR | 10 | | | | | | | | | | | | | | | | | |
| | 11 | | | | | | | | | | | | | | | | | |
| | 12 | | | | | | | | | | | | | | | | | |

FIG. 15

**ZONE LOGIC FLOW TABLE**

NAME ENGINE HEAD LINE TRANSFER STATION (CIRCLE ONE) MECHANISM / (STATION) / MACHINE

| ZONE NAMES | ZONE NUMBER (REF) | ADVANCED LIMIT SW (I, P) | RETURNED LIMIT SW (I, P) | TRANSFER COMMAND (I, L) | RETURN COMMAND (I, L) | | | | | | RETURN SOLENOID (O, P) | TRANSFER SOLENOID (O, P) | DON'T CLAMP (O, L) | DON'T CYCLE (O, L) | | | | |
|---|---|---|---|---|---|---|---|---|---|---|---|---|---|---|---|---|---|---|
| T-BAR RETURNED AND ADVANCING | 1 | 10 | (2) | X | 10 | | | | | | 10 | X | X | X | | | | |
| T-BAR ADVANCING | 2 | 3 | 10 | 10 | 10 | | | | | | 10 | X | X | X | | | | |
| T-BAR ADVANCED | 3 | X | 10 | 10 | 4 | | | | | | 10 | 10 | X | X | | | | |
| T-BAR ADVANCED AND RETURNING | 4 | (5) | 10 | 10 | 10 | | | | | | X | 10 | 10 | 10 | | | | |
| T-BAR RETURNING | 5 | 10 | 6 | 10 | 10 | | | | | | X | 10 | X | X | | | | |
| T-BAR RETURNED | 6 | 10 | X | 1 | 10 | | | | | | 10 | 10 | X | X | | | | |
| | 7 | | | | | | | | | | | | | | | | | |
| | 8 | | | | | | | | | | | | | | | | | |
| | 9 | | | | | | | | | | | | | | | | | |
| ERROR | 10 | | | | | | | | | | | | | | | | | |

INPUT I, OUTPUT O, PHYSICAL P, LOGICAL L

FIG. 16

**I/O TABLE**

| NAME I/O DEVICE | STATION | SLOT # | WIRE # |
|---|---|---|---|
| ADVANCE DRILL SLIDE PUSH BUTTON | 3L | 10 | 363 |
| RETURN DRILL SLIDE PUSH BUTTON | 3L | 11 | 364 |
| DRILL SLIDE ADVANCED LIMIT SWITCH | 3L | 15 | 110 |

FIG. 19

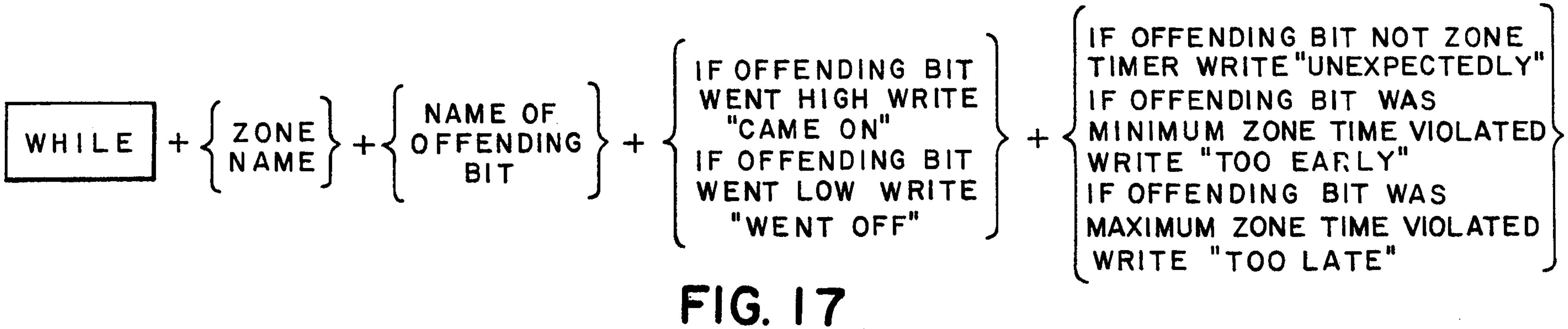
WHILE
+
ZONE NAME
+
NAME OF OFFENDING BIT
+
IF OFFENDING BIT WENT HIGH WRITE "CAME ON"
IF OFFENDING BIT WENT LOW WRITE "WENT OFF"
+
IF OFFENDING BIT NOT ZONE TIMER WRITE "UNEXPECTEDLY"
IF OFFENDING BIT WAS MINIMUM ZONE TIME VIOLATED WRITE "TOO EARLY"
IF OFFENDING BIT WAS MAXIMUM ZONE TIME VIOLATED WRITE "TOO LATE"

FIG. 17

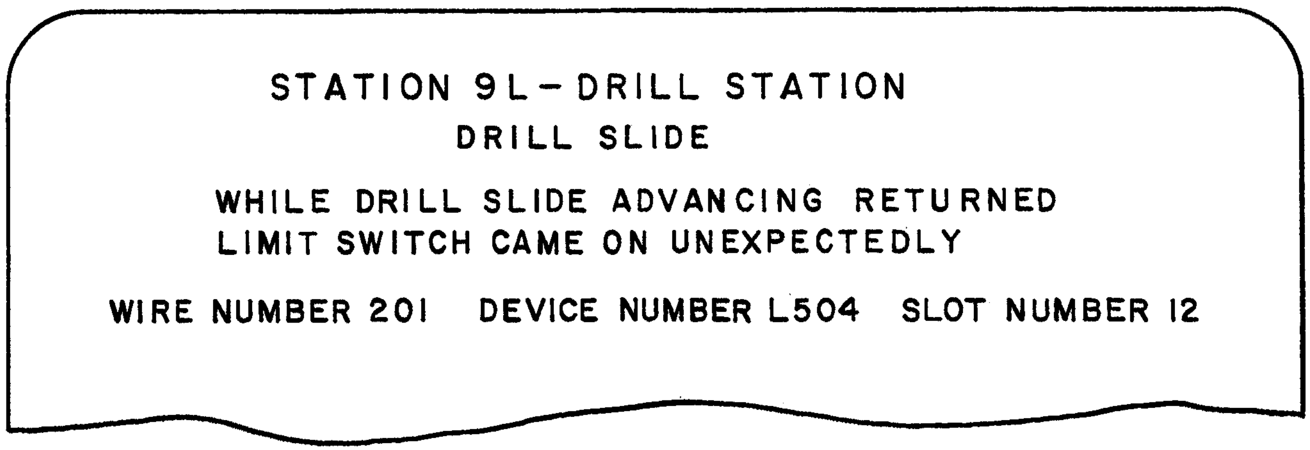
STATION 9L – DRILL STATION
DRILL SLIDE
WHILE DRILL SLIDE ADVANCING RETURNED
LIMIT SWITCH CAME ON UNEXPECTEDLY
WIRE NUMBER 201
DEVICE NUMBER L504
SLOT NUMBER 12

FIG. 18

European Patent Office

# EUROPEAN SEARCH REPORT

0208997

Application number

EP 86 10 9027

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CONTROL ENGINEERING, vol. 30, no. 1, January 1983, pages 156-162, St. Pontiac, Illinois, US; A. PIETRZYK et al.: "Machine diagnostics add to PC productivity gains" * Page 156; page 157, centre column, lines 7-10; page 157, left-hand column , line 1 - end of page; page 158, left-hand column; pages 160,161 * --- | 1,2,6-8 | G 05 B 19/04 |
| X | EP-A-0 141 858 (FANUC) * Abstract; page 3, line 11 -page 4, line 14; page 10, line 8 - page 11, line 24; page 13, line 3 - page 14, line 7; figure 6 * --- | 3,6 | |
| | | | TECHNICAL FIELDS SEARCHED (Int. Cl.4) |
| X | DE-A-3 305 807 (OMRON TATEISI ELECTRONICS) * Page 25, line 12 -page 28, line 8; figures 11-13 * --- -/- | 4 | G 05 B<br>G 06 F |

The present search report has been drawn up for all claims

| Place of search | Date of completion of the search | Examiner |
|---|---|---|
| THE HAGUE | 01-09-1986 | CORNILLIE O.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

EP 86 10 9027



## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WERKSTATT UND BETRIEB, vol. 115, no. 6, June 1982, pages 353-363,365,366, Munich, DE; H. BRANDT et al.: "Diagnose an Werkzeugmaschinen und Fertigungsüberwachung", & P. JUNG: "Fehlerdiagnose mit Bildschirm-Textangabe an Sonder-Werkzeugmaschinen" * Page 355, paragraph 3.2 "Zeitüberwachung"; page 357, right-hand column, line 24 - page 358, right-hand column, line 43; page 365, chapter 2 * | 5,9 | |
| | ----- | | TECHNICAL FIELDS SEARCHED (Int. Cl.4) |

The present search report has been drawn up for all claims

| Place of search | Date of completion of the search | Examiner |
|---|---|---|
| THE HAGUE | 01-09-1986 | CORNILLIE O.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82